# FASCICULE DE BREVET EUROPEEN

(11) **EP 0 432 041 B1**
(45) Date de publication et mention de la délivrance du brevet: **05.10.1994**
(21) Numéro de dépôt: 90403459.2
(22) Date de dépôt: 06.12.1990
(51) Int. Cl.: C03C 25/02

(54) **Procédé de production de fibres de verre discontinues et produits en résultant**
Verfahren zur Herstellung diskontinuierlicher Glasfasern und so erhaltene Produkte
Process of manufacturing discontinuous glass fibres and products therefrom

(30) Priorité: 06.12.1989 FR 8916093
(43) Date de publication de la demande: 12.06.1991
(73) Titulaire: ISOVER SAINT-GOBAIN, F-92400 Courbevoie (FR)
(72) Inventeur: Guillard, Christian, F-94300 Vincennes (FR); Gicquel, Bernard, F-95350 St. Brice S/Foret (FR); Berthier, Guy, F-60600 Clermont (FR)
(74) Mandataire: Breton, Jean-Claude

(56) Documents cités:
- FR-A- 1 191 203
- FR-A- 2 276 275
- US-A- 3 669 638
- US-A- 4 555 447

## Description

L'invention concerne un procédé de fabrication de fibres discontinues à partir d'une matière thermoplastique à point de fusion élevé, telle que du verre. Elle se réfère plus spécialement au procédé de fibrage utilisant la centrifugation de la matière fondue et/ou son étirage à l'aide de fluides gazeux.

L'invention concerne également les fibres ainsi obtenues et les produits comprenant lesdites fibres.

Les fibres obtenues selon l'invention sont destinées à être associées à d'autres fibres en vue de réaliser des fils ou des mèches hybrides.

Les fils ou mèches hybrides connus sont extrêmement variés et entrent dans la composition de nombreux produits trouvant un usage dans les applications les plus diverses. Ainsi, il est connu de réaliser des fils hybrides à partir de fibres de verre, fréquemment choisies à cause de leurs propriétés physiques et chimiques particulièrement avantageuses. Ces fils servent à fabriquer, par exemple, des vêtements de protection, des joints d'étanchéité ou des tissus de filtration.

Pour ce faire, les fibres de verre utilisées traditionnellement sont issues de fils continus obtenus par le procédé suivant : le verre fondu s'écoule sous forme de filets à partir d'un grand nombre d'orifices disposés régulièrement à la base d'une filière chauffée par effet Joule ; les filets, étirés mécaniquement à l'aide d'une broche, donnent naissance à un grand nombre de filaments qui sont rassemblés pour former au moins un fil continu.

Pour la réalisation de fils hybrides, ces fils continus sont utilisés sous forme de fils coupés à des longueurs comprises entre 10 et 100 millimètres d'après le brevet FR 2 497 239 et qui peuvent atteindre 1000 millimètres d'après le brevet US 2 706 377.

L'utilisation de tels fils, sous cette présentation particulière, permet de choisir tel ou tel type de fil coupé en fonction de caractéristiques précises comme le diamètre des filaments qui le constituent et sa longueur.

Ces fils sont constitués de filaments nécessairement ensimés lors de leur fabrication. En effet, l'ensimage remplit différentes fonctions et doit satisfaire certaines exigences. Ainsi, par exemple :
- l'ensimage doit protéger la surface des filaments et du fil qui sont particulièrement sensibles à l'abrasion. Sans cette protection, l'opération de fibrage du verre serait fortement perturbée et le fil obtenu serait endommagé à l'issue des différentes manipulations qu'il est amené à subir ;
- l'ensimage doit permettre la formation d'un fil, donc assurer la cohésion des filaments entre eux. Après séchage, il doit donc agir comme un agent collant ;
- l'ensimage doit conférer un certain nombre de propriétés au fil, différentes selon l'application recherchée.

Pour obtenir les différents effets voulus, l'ensimage doit être nécessairement réalisé à partir d'un ensemble de composés, dont la nature et la quantité utilisée résultent d'un choix toujours délicat.

Les fils coupés utilisés pour réaliser des fils hybrides peuvent être revêtus d'ensimages classiques mis au point pour des applications bien différentes (ensimages dits "textile" ou "plastique"). Bien que ces ensimages paraissent donner satisfaction, le brevet US 4 584 110 a démontré récemment la nécessité de trouver une formulation d'ensimage spécifiquement mise au point pour cette application particulière.

Les compositions d'ensimage décrites et revendiquées dans ce brevet comprennent toujours un nombre non négligeable de constituants, à l'instar des ensimages classiques.

D'après le brevet US-A-4 555 447, il est connu de pulvériser sur des fibres de verre discontinues un mélange d'agents antistatiques et lubrifiant ainsi qu'un liant. Ce dernier permet de conférer à la laine de verre, formée par l'enchevêtrement des fibres, la résilience nécessaire pour être comprimée dans des emballages avant d'être soufflées sous forme de nodules pour isoler des bâtiments.

Le brevet US-A-3 669 638 décrit également une composition de traitement de fibres de verre discontinues qui peut être pulvérisée sur les fibres avant ou après leur réception sur une bande transporteuse sous forme de mat. Là encore, cette composition contient un liant qui peut passer à l'état de gel avant d'être polymérisé dans un four.

La présente invention a pour objet des fibres destinées à entrer dans la composition de fils hybrides et dont le procédé de fabrication ne présente pas les contraintes des procédés utilisés pour fabriquer des fils de verre continus.

La présente invention a aussi pour objet des fibres dont le coût de fabrication est inférieur à celui des fils de verre continus, et qui sont susceptibles de se substituer auxdits fils dans la composition des fils hybrides.

L'objet de l'invention est atteint grâce à un procédé de fabrication de fibres discontinues à partir d'une matière thermoplastique à point de fusion élevé, telle que du verre, selon lequel on alimente en matière fondue un centrifugeur muni d'une paroi périphérique percée d'un grand nombre d'orifices, on fait passer ladite matière à travers lesdits orifices et on l'étire, sous l'action de la force centrifuge, en une multiplicité de filets transformés en fibres sous l'action de jets de gaz dirigés perpendiculairement au déplacement desdits filets, puis on recueille lesdites fibres sur une bande transporteuse, et qui consiste à pulvériser sur les fibres, avant leur réception sur la bande transporteuse, un ensimage se présentant sous la forme d'une émulsion ou suspension dans l'eau ou d'une solution aqueuse et qui comprend comme matières actives au moins un composé remplissant le rôle d'agent lubrifiant et d'agent antistatique et/ou au moins deux composés, l'un étant un agent lubrifiant, l'autre un agent antistatique, et, éventuellement, au moins un agent émulsifiant, la quantité de matières actives pulvérisées étant égale ou supérieure à environ 5 kilogrammes par tonne de fibres.

Par rapport aux fils coupés, l'emploi de fibres de verre obtenues selon l'invention, qui sont non pas collées les unes aux autres mais simplement enchevêtrées, permet d'éviter ou tout au moins de faciliter l'opération dite "d'ouvraison" ; cette opération consiste à séparer les fibres les unes des autres préalablement aux opérations de mélange puis de cardage.

Par ailleurs, il a été découvert que, d'une manière inattendue, les fibres de verre obtenues selon l'invention se prêtent parfaitement aux opérations de cardage et de mélange avec d'autres fibres appelées le plus souvent "fibres supports". Ces fibres supports sont, par exemple, des fibres de laine, de coton ou des fibres synthétiques telles que les fibres polyesters et polyamides.

De plus, il a été découvert que la composition de l'ensimage pulvérisé sur les fibres peut être simplifiée par rapport à celles de l'art antérieur. C'est ainsi que, selon l'invention, l'ensimage comprend comme matières actives les seuls constituants qui facilitent la mise en oeuvre des fibres de verre lors des opérations de mélange, de cardage et de filature. Ces constituants sont des agents lubrifiants et antistatiques.

D'après l'invention, les matières actives entrant dans la composition de l'ensimage sont formées, de préférence, pour plus de 50 % en poids desdites matières, de composé (s) dont la fonction lubrifiante est prédominante. Ce pourcentage peut atteindre pratiquement 100 % lorsque l'ensimage ne comprend qu'un seul type de composé (s) qui joue (nt) à la fois le rôle d'un lubrifiant et d'un antistatique ; il s'agit d'ester (s) ou d'alcool (s) de polyglycol.

D'après l'invention l'ensimage peut comprendre des composés utilisés pour leur seule action lubrifiante. Ces agents lubrifiants sont choisis, classiquement, parmi les composés non ioniques tels que les huiles minérales, végétales, les cérides ou les cires émulsifiables dans l'eau à l'aide d'émulsifiants non ioniques du type alcoylphénolpolyoxyéthyléné, polyoxyalkylène sorbitane ou amide d'acide gras à longue chaîne polyoxyéthylénée. Les agents lubrifiants peuvent être également choisis parmi les lubrifiants cationiques hydrosolubles ou tels que la cire de polyéthylène mise en émulsion dans l'eau par un émulsifiant cationique du type amine aliphatique quaternisée à longue chaîne carbonée ou amine grasse à longue chaîne polyoxyéthyléné.

Les agents antistatiques qui sont ajoutés aux agents lubrifiants associés sont, de préférence, des chlorures tels que le chlorure de magnésium, de lithium ou un chlorure d'ammonium tel que le chlorure de triméthylalkylammomium.

L'ensimage est pulvérisé depuis l'extérieur de la zone délimitée par les trajectoires parcourues par les fibres avant d'être recueillies sur la bande transporteuse. De préférence, l'ensimage est pulvérisé à partir de plusieurs sources disposées autour de ladite zone. Ces sources sont régulièrement distribuées dans un plan approximativement perpendiculaire à la trajectoire des fibres.

Le procédé selon l'invention peut être mis en oeuvre à partir de dispositifs connus et décrits dans de nombreux documents, tels que les brevets US 3 020 586, US 3 304 164, US 2 949 632 ou US 3 523 774.

Si l'invention est susceptible d'être mise en oeuvre par différents moyens, il est possible de sélectionner les conditions de fabrication en vue d'obtenir des fibres qui répondent le mieux possible à l'application envisagée. Ainsi, il a été constaté que les meilleures fibres dans ce domaine sont celles dont les caractéristiques se rapprochent le plus des fibres constituant les fils continus. Il est souhaitable, en particulier, de fabriquer des fibres dont le diamètre soit relativement peu dispersé et dont la résistance à la traction soit la plus élevée possible.

Cette catégorie de fibres peut être obtenue par exemple en utilisant une installation de fibrage telle que décrite par le brevet US-A-3 304 164.

Cette installation est formée pour l'essentiel d'un centrifugeur constitué d'un corps fixé sur un arbre creux entraîné en rotation. Ce corps supporte dans l'axe un panier de forme cylindrique dont la paroi périphérique est perforée d'un grand nombre d'orifices. Le corps du centrifugeur se prolonge par une bande périphérique qui est également perforée d'un grand nombre d'orifices. En l'occurrence, le diamètre de ces orifices décroît régulièrement depuis la partie supérieure de la bande jusqu'à sa partie inférieure. Cette bande est surmontée d'une chambre de combustion annulaire coaxiale au centrifugeur. La base de cette chambre est munie d'une série d'orifices d'où s'échappent verticalement les jets de gaz chaud.

Lorsque le centrifugeur est en rotation, le verre fondu tombe verticalement sur le fond du panier d'où il s'échappe, sous forme de filets, par les orifices de sa paroi. Le verre fondu, ainsi divisé, est plaqué sous l'effet de la force centrifuge sur la surface intérieure de la bande du centrifugeur, d'où il s'échappe en de multiples filets radiaux, par ses multiples orifices. Ces filets sont immédiatement repris par les jets de gaz chauds émis dans une direction à peu près parallèle à l'axe du centrifugeur. Ces jets ont pour effet d'étirer les filets sous formes de fibres et de les guider jusqu'à un organe de réception situé sous le centrifugeur.

La variation de diamètre des orifices de la bande du centrifugeur permet de compenser les variations de diamètre des fibres, dues au fait que les filets émis par les orifices situés au sommet de la bande sont soumis à l'action de gaz plus chauds et pendant plus longtemps que ceux délivrés par les orifices situés à sa partie inférieure.

Ce type de centrifugeur permet aussi de séparer les trajectoires des fibres sur une assez grande distance et, de ce fait, de maintenir leur résistance à la traction à un niveau élevé. L'installation de fibrage utilisée comprend une chambre collectrice, dont la paroi a pour but de canaliser les fibres entre le centrifugeur et l'organe de réception.

Des pulvérisateurs, dont l'axe est approximativement perpendiculaire à la trajectoire des fibres, sont implantés dans la paroi de la chambre collectrice. Ces pulvérisateurs sont alimentés en ensimage sous pression par l'intermédiaire de pompes reliées à au moins une source d'ensimage.

Les fibres revêtues de fines gouttelettes d'ensimage sont recueillies sur l'organe de réception qui est, par exemple, une bande transporteuse perforée se déplaçant horizontalement. La quantité d'ensimage qui doit être déposée sur les fibres de verre dépend de nombreux facteurs tels que la concentration en matières actives de l'ensimage, le débit du centrifugeur, le nombre de pulvérisateurs.

En fonction de l'installation choisie, les différents paramètres de fabrication doivent être définis de manière à obtenir sur les fibres, après évaporation de l'eau de l'ensimage, une quantité de matières leur permettant de supporter les conditions de fabrication des fils ou mèches hybrides. L'expérience montre que cette quantité de matière est comprise entre environ 0,5 et 5 % en poids par rapport au poids de verre et de préférence, entre environ 1 et 3 %. Pour obtenir cette quantité de matière, il est nécessaire de pulvériser sur les fibres une assez grande quantité d'ensimage. En effet, l'ensimage en milieu aqueux comprenant généralement entre 1 et 5 % en poids de matières actives, la quantité d'ensimage pulvérisée est le plus généralement égale ou supérieure à 200 kilogrammes par tonne de fibres.

Dans une installation telle que décrite précédemment, un centrifugeur est alimenté en verre fondu dont la composition théorique pondérale est la suivante : SiO₂ : 64 % - Al₂O₃ : 3,5 % - CaO : 7 % - MgO : 3 % - Na₂O : 15,5 % - K₂O : 1,5 % - B₂O₃ : 3 % - F : 1,5 % -impuretés : de l'ordre du pourcent.

Les fibres obtenues présentent un diamètre moyen compris entre environ 2 micromètres et environ 10 micromètres. Ces fibres sont ensimées à l'aide de 16 pistolets pulvérisateurs, disposés régulièrement autour du cylindre défini par la trajectoire des fibres.

selon un premier exemple les matières actives entrant dans la composition de l'ensimage sont formées à environ 80 % en poids d'ester de polyglycol comprenant une chaîne comprenant en moyenne 12 atomes de carbone et à environ 20% d'une amine grasse polyoxyéthylénée. L'ensimage comprend 1,95 % en poids de matières actives et le complément d'eau déminéralisée. La quantité d'ensimage pulvérisée est en moyenne de 680 kilogrammes par tonné de fibres de verre. La quantité de matières sèches recouvrant les fibres est en moyenne de 1,2 % en poids par rapport au poids de verre.

Avec la même installation et selon un deuxième exemple, on pulvérise un ensimage formé d'une émulsion dans l'eau de 2,5 % en poids d'un lubrifiant antistatique commercialisé sous la marque NOPCOSTAT 2152-P par la société HENKEL - NOPCO. Les quantités pulvérisées par tonne de verre sont les mêmes que précédemment. La quantité de matières sèches recouvrant les fibres est en moyenne de 1,5% en poids par rapport au poids de verre.

## Revendications

1. Procédé de fabrication de fibres de verre discontinues selon lequel on alimente en verre fondu un centrifugeur muni d'une paroi périphérique percée d'un grand nombre d'orifices, on fait passer ledit verre à travers lesdits orifices et on l'étire, sous l'action de la force centrifuge, en une multiplicité de filets transformés en fibres sous l'action de jets de gaz dirigés perpendiculairement au déplacement desdits filets, puis on recueille lesdites fibres sur une bande transporteuse, qui consiste, à l'exclusion de tout autre traitement desdites fibres avant ou après réception sur la bande transporteuse, à pulvériser sur les fibres, avant leur réception sur la bande transporteuse, un ensimage se présentant sous la forme d'une émulsion ou suspension dans l'eau ou d'une solution aqueuse et qui comprend comme matières actives au moins un composé remplissant le rôle d'un agent lubrifiant et d'agent antistatique, et/ou au moins deux composés, l'un étant un agent lubrifiant, l'autre un agent antistatique et, éventuellement, un agent émulsifiant, la quantité de matières actives pulvérisées étant telle que le poids desdites matières demeurant sur les fibres après évaporation de l'eau est au moins égal à environ 0,5 % par rapport au poids du verre.

2. Procédé selon la revendication 1, caractérisé en ce que les matières actives entrant dans la composition de l'ensimage pulvérisé sur les fibres sont formées, pour plus de 50 % en poids desdites matières de composé (s) dont la fonction lubrifiante est prédominante.

3. Procédé selon la revendication 2, caractérisé en ce que 100 % des matières actives entrant dans la composition de l'ensimage sont formés d'un ou plusieurs composés choisis parmi les esters et les alcools de polyglycol.

4. Procédé selon la revendication 2, caractérisé en ce que les matières actives sont formées d'au moins un lubrifiant non-ionique, d'au moins un émulsifiant non-ionique et d'au moins un agent antistatique.

5. Procédé selon la revendication 2, caractérisé en ce que les matières actives sont formées d'au moins un lubrifiant cationique, d'au moins un agent antistatique et, éventuellement, d'un émulsifiant cationique.

6. Procédé selon l'une quelconque des revendications précédentes, caractérisé en ce que l'ensimage est pulvérisé depuis l'extérieur de la zone délimitée par les trajectoires parcourues par les fibres avant d'être recueillies sur la bande transporteuse.

7. Procédé selon la revendication 6, caractérisé en ce que l'ensimage est pulvérisé à partir de plusieurs sources disposées autour de la zone délimitée par les trajectoires des fibres.

8. Fibres de verre obtenues selon le procédé défini par l'une quelconque des revendications précédentes, caractérisées en ce que, après évaporation de l'eau de l'ensimage déposé, la quantité de matières demeurant sur lesdites fibres est comprise entre environ 0,5 et environ 5% en poids par rapport au poids du verre.

## Claims

1. Process for manufacturing discontinuous fibres from a thermoplastic material with a high melting point, such as glass, according to which melted material is supplied to a centrifuger provided with a peripheral wall through which a large number of apertures pass, the said material is passed through the said apertures and is drawn, under the action of the centrifugal force, into a large number of streams which are transformed into fibres under the action of gas jets directed perpendicular to the movement of the said streams, the said fibres then being collected on a conveyor belt; which consists in spraying, onto the fibres, prior to the collection thereof on the conveyor belt, a size in the form of an emulsion or a suspension in water or an aqueous solution, and which comprises, as active materials, at least one compound acting as a lubricating agent and as an anti-static agent, and/or at least two compounds, the one being a lubricating agent, and the other an anti-static agent, and, optionally, an emulsifying agent.

2. Process according to Claim 1,
characterised in that more than 50% by weight of the active materials in the size which is sprayed onto the fibres are materials of the compound(s), the function of which is predominantly lubrication.

3. Process according to Claim 2,
characterised in that 100% of the active materials in the size are formed of one or more compounds selected from among the esters and alcohols of polyglycol.

4. Process according to Claim 2,
characterised in that active materials are formed of at least one non-ionic lubricant, of at least one non-ionic emulsifier, and at least one anti-static agent.

5. Process according to Claim 2,
characterised in that the active materials are formed of at least one cationic lubricant, at least one anti-static agent, and, optionally, of a cationic emulsifier.

6. Process according to any one of the preceding claims, characterised in that the size is sprayed from the outside of the zone delimited by the trajectories travelled by the fibres before they are collected on the conveyor belt.

7. Process according to Claim 6,
characterised in that the size is sprayed from several sources disposed around the zone delimited by the trajectories of the fibres.

8. Glass fibres obtained according to the process described by any one of the preceding claims, characterised in that, after evaporation of the water from the size that has been deposited, the quantity of the material remaining on the said fibres is between approximately 0.5 and approximately 5 weight % in relation to the weight of the glass.

## Patentansprüche

1. Verfahren zur Herstellung von Glasfasern in nichtkontinuierlicher Form, wonach man ein Schleuderorgan mit Glasschmelze versorgt, welches mit einer Umfangswand versehen ist, in der eine große Anzahl von Öffnungen angebracht ist, das Glas durch die Öffnungen hindurchtreten läßt und es unter der Einwirkung der Fliehkraft in eine Mehrzahl von Fäden auszieht, welche unter der Einwirkung von senkrecht zur Fortbewegung der Fäden gerichteten Gasstrahlen in Fasern umgeformt werden, dann die Fasern auf einem Förderband auffängt, und das Verfahren unter Ausschluß jeglicher anderer Behandlung der Fasern vor oder nach der Ablage auf dem Förderband darin besteht, vor der Ablage auf dem Förderband eine Schlichte auf die Fasern zu versprühen, welche in Form einer Emulsion oder Suspension in Wasser oder einer wäßrigen Lösung vorliegt, und welche als Wirkstoffe mindestens einen Bestandteil aufweist, der die Rolle eines Schmiermittels und Antistatikmittels erfüllt, und/oder mindestens zwei Bestandteile, von denen einer ein Schmiermittel, der andere ein Antistatikmittel ist, sowie eventuell einen Emulgator, wobei die Menge der versprühten Wirkstoffe derart ist, daß das Gewicht der nach dem Verdampfen des Wassers auf den Fasern verbleibenden Stoffe mindestens gleich ca. 0,5% im Verhältnis zum Gewicht des Glases beträgt.

2. Verfahren nach Anspruch 1, dadurch gekennzeichnet, daß die Wirkstoffe, welche in der auf die Fasern versprühten Schlichtezusammensetzung vorhanden sind, zu mehr als 50 Gew.-% der Substanzen aus einem Bestandteil bzw. Bestandteilen gebildet sind, dessen bzw. deren Schmierfunktion überwiegt.

3. Verfahren nach Anspruch 2, dadurch gekennzeichnet, daß 100% der in der Schlichtezusammensetzung vorhandenen Wirkstoffe aus einem oder mehreren Bestandteilen gebildet sind, welche aus den Polyglycol-Estern und -Alkoholen ausgewählt sind.

4. Verfahren nach Anspruch 2, dadurch gekennzeichnet, daß die Wirkstoffe aus mindestens einem nicht-ionogenen Schmiermittel, mindestens einem nicht-ionogenen Emulgator und mindestens einem Antistatikmittel gebildet sind.

5. Verfahren nach Anspruch 2, dadurch gekennzeichnet, daß die Wirkstoffe aus mindestens einem kationischen Schmiermittel, mindestens einem Antistatikmittel und eventuell einem kationischen Emulgator gebildet sind.

6. Verfahren nach einem der vorangegangenen Ansprüche, dadurch gekennzeichnet, daß die Schlichte vom Äußeren der Zone her versprüht wird, welche durch die von den Fasern vor dem Auffangen auf dem Förderband durchlaufenen Flugbahnen beschrieben ist.

7. Verfahren nach Anspruch 6, dadurch gekennzeichnet, daß die Schlichte aus mehreren Quellen versprüht wird, welche um die von den Flugbahnen der Fasern beschriebene Zone angeordnet sind.

8. Glasfasern, welche nach dem in einem der vorangegangenen Ansprüche beschriebenen Verfahren hergestellt sind, dadurch gekennzeichnet, daß nach dem Verdampfen des Wassers der aufgebrachten Schlichte die Menge der auf den Fasern verbleibenden Substanzen zwischen ca. 0,5 und ca. 5 Gew.-% im Verhältnis zum Gewicht des Glases liegt.
